# EUROPEAN PATENT APPLICATION

(11) **EP 3 000 987 A1**
(43) Date of publication of application: **30.03.2016**
(21) Application number: 15182280.6
(22) Date of filing: 25.08.2015
(51) Int. Cl.: F01D 25/02, F01D 9/06, F02C 7/047, F01D 25/00

(54) **A GAS TURBINE ENGINE AND A METHOD OF WASHING A GAS TURBINE ENGINE**

(30) Priority: 25.09.2014 GB 201416928
(71) Applicant: Rolls-Royce plc, London SW1E 6AT (GB)
(72) Inventor: Aggas, Timothy, Derby, Derbyshire DE24 8BJ (GB)
(74) Representative: Rolls-Royce plc

(57) **Abstract**

There is disclosed a method of washing a gas turbine engine (10) of a type having an anti-icing arrangement comprising a fluid delivery system (33) configured to deliver a flow of hot gas to a region (36) of the engine during operation of the engine. The method comprises the steps of: connecting a supply of cleaning liquid to said fluid delivery system (33); creating a flow of said cleaning liquid through at least part of said fluid delivery system (33) for delivery to said region (36) of the engine; and directing said cleaning liquid towards internal components (25, 27, 30) of the engine. Also disclosed is a gas turbine engine of a type configured for implementation of the method

## Description

The present invention relates to a gas turbine engine, and to a related method of washing a gas turbine engine.

Over time, and during operation of gas turbine engines such as those commonly used to power aircraft, deposits and dirt can build up on the compressor blades and other internal components of the engine to such a degree that the aerodynamic efficiency of the blades and other components can become impaired which, in turn, can increase the engine's running temperature and fuel consumption. It is therefore common practice to remove the deposits and dirt by washing the internal components of the engine during regular maintenance of the engine throughout its operational life.

Typically, the internal components of a gas turbine engine are washed by injecting water, optionally mixed with specialist cleaning fluids, into the engine when it is temporarily taken out of service for a regular maintenance check or overhaul. Existing wash procedures usually require the attachment of external washing equipment to the engine in order to direct a flow of cleaning water into the engine. However, the use of this type of washing equipment has been found often to provide poor cleaning results. Also, the need to affix specialist cleaning equipment to the engine and then subsequently remove the equipment from the engine can involve quite considerable time to prepare the engine for washing, or to restore the engine back to its operational condition following washing.

It is also to be noted that washing an engine with water in this way cannot generally be conducted at low temperatures due to the risk of creating a build-up of ice on critical components of the engine, which could then cause potential damage to the engine when it is subsequently run. It is well understood that the build-up of ice on internal components of a gas turbine engine should be avoided due to the risk of damage being caused if the ice becomes detached and then passes through the engine during operation or a test run of the engine following a service.

It is a first object of the present invention to provide an improved method of washing a gas turbine engine. It is a second object of the present invention to provide an improved gas turbine engine.

According to a first aspect of the present invention, there is provided a method of washing a gas turbine engine of a type having an anti-icing arrangement comprising a fluid delivery system configured to deliver a flow of hot gas to a region of the engine during operation of the engine, the method comprising the steps of: connecting a supply of cleaning liquid to said fluid delivery system; creating a flow of said cleaning liquid through at least part of said fluid delivery system for delivery to said region of the engine; and directing said cleaning liquid towards internal components of the engine.

Optionally, said flow of cleaning liquid is controlled by an electronic control system provided as part of the engine and which is also configured to control the engine during normal operation of the engine.

Said internal components may include aerofoil blades located within the core of the engine, and said step of directing the cleaning liquid towards said internal components may involve spraying the cleaning liquid through at least part of the engine's core, from said region of the engine towards said aerofoil blades.

Conveniently, said aerofoil blades include rotor blades provided around one or more rotors within the core of the engine, and the method can further include the step of rotating the or each said rotor during said step of directing the cleaning liquid towards said internal components.

Advantageously, rotation of the or each said engine rotor during said flow of cleaning liquid through the engine's fluid delivery system is controlled by said electronic control system.

Preferably, said region of the engine to which said flow of cleaning fluid is delivered via the engine's fluid delivery system is located at the upstream end of a core compressor of the engine.

Advantageously, said core compressor includes a plurality of variable stator vanes towards which said cleaning liquid is directed from said region of the engine, the method further including the step of opening said variable stator vanes.

Conveniently, said core compressor includes a plurality of variable inlet guide vanes towards which said cleaning liquid is directed from said region of the engine, the method further including the step of opening said variable inlet guide vanes.

Optionally, the or each said step of opening said vanes is controlled by said electronic control system.

The engine may include a plurality of engine section stator vanes located at the upstream end of its core, at least some which may include flow channels and fluid outlets forming part of said fluid delivery system, in which case the method may include the step of directing said cleaning liquid through said flow channels and outlets.

Said cleaning liquid may include water. Optionally, said cleaning liquid includes cleaning chemicals.

According to a second aspect of the present invention, there is provided a gas turbine engine, the engine having an anti-icing arrangement comprising a fluid delivery system which is arranged to operate in i) an anti-icing mode in which it is configured to bleed a flow of hot gas from a first region of the engine and deliver the flow of hot gas to a second region of the engine during operation of the engine, and ii) a discrete washing mode in which it is: connectable to a flow of cleaning liquid; and configured to direct said cleaning liquid to said second region of the engine and to direct said cleaning liquid towards internal components of the engine.

Preferably, the engine further comprises an electronic control system configured to control the engine during normal operation of the engine, wherein said control system is also configured to select said anti-icing mode and said washing mode of the fluid delivery system.

Optionally, said internal components include rotor blades provided around one or more rotors within the core of the engine, and wherein said electronic control unit is configured to rotate the or each said rotor when the fluid delivery system is in said washing mode.

Conveniently, said second region of the engine to which said cleaning liquid is directed in said washing mode is located at the upstream end of a core compressor.

Said core compressor may include a plurality of variable stator vanes, said fluid delivery system being arranged to direct said cleaning liquid towards said variable stator vanes when in said washing mode, and wherein said electronic control unit is configured to open said variable stator vanes in said washing mode.

Optionally, said core compressor includes a plurality of variable inlet guide vanes, said fluid delivery system being arranged to direct said cleaning liquid towards said variable inlet guide vanes when in said washing mode, and wherein said electronic control unit is configured to open said variable inlet guide vanes in said washing mode.

The engine may have a plurality of engine section stator vanes located at the upstream end of its core, and wherein at least some of said engine section stator vanes include flow channels and fluid outlets forming part of said fluid delivery system.

Advantageously, said fluid delivery system includes a fluid flow valve, the valve being operable to select between said anti-icing mode and said washing mode, and having a plurality of discrete configurations including at least a first configuration in which it permits the flow of said hot gas from said first region of the engine to said second region of the engine in said anti-icing mode, and a second configuration in which it permits the flow of said cleaning liquid to said second region of the engine in said washing mode.

Said valve may be configured to prevent the flow of said cleaning liquid when in said first configuration, and may be configured to prevent the flow of said hot gas when in said second configuration.

Said valve can also have a third configuration in which it prohibits the flow of both said hot gas and said cleaning liquid to said second region of the engine.

Conveniently, said electronic control system is arranged to control the operation of said valve.

The engine can include a liquid connection port provided in fluid communication with said fluid delivery system, the connection port being configured for connection to an external supply of said cleaning liquid. Preferably, said liquid connection port is fluidly connected to said valve.

So that the invention may be more readily understood, and so that further features thereof may be appreciated, embodiments of the invention will now be described by way of example with reference to the accompanying drawings in which:
Figure 1 is a schematic longitudinal cross-sectional view through a ducted fan gas turbine engine; and
Figure 2 is an enlarged cross-sectional view showing in more detail the region of the engine indicated by area C in Figure 1.

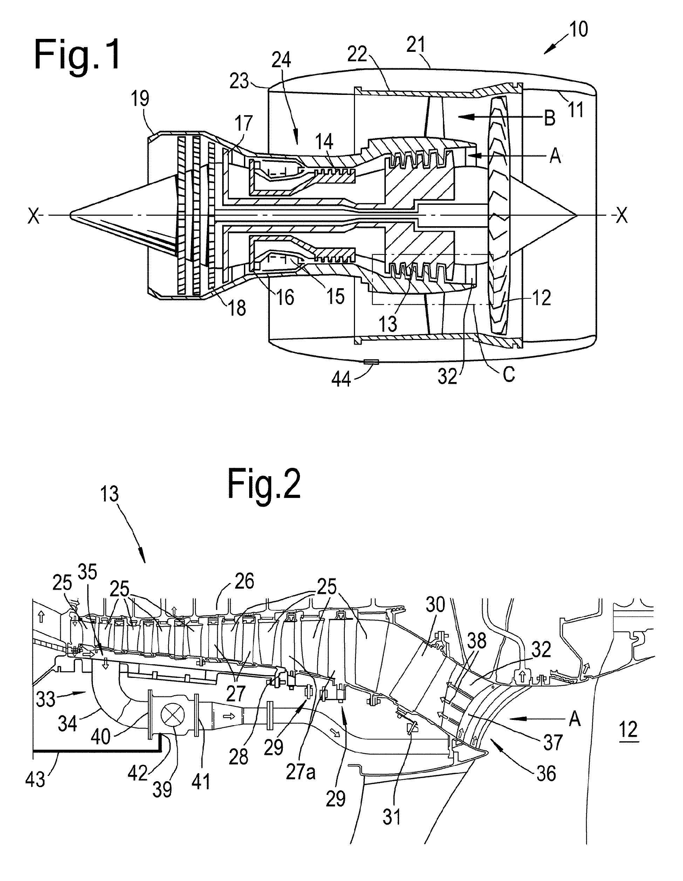

With reference to Figure 1, a ducted fan gas turbine engine incorporating the invention is generally indicated at 10 and has a principal and rotational axis X-X. The engine comprises, in axial flow series (flow being indicated from right-to-left in the drawing), an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During normal operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

As will be appreciated by those of skill in the art of gas turbine engines, the specific configuration of engine illustrated in figure 1 is a so-called ducted fan or turbofan engine, by virtue of the provision of the propulsive fan upstream 12 of the engine's core 24 which is indicated generally at 24 in Figure 1. The core 24, which is also sometimes called a gas generator, comprises the intermediate and high pressure turbines 13, 14, the combustion equipment 15 and the three turbines 17, 18, 19.

Figure 2 shows a region of the engine's intermediate pressure compressor 13 in more detail, and specifically shows the region denoted C in Figure 1. As will be appreciated, the intermediate pressure compressor 14 can be considered to be a so-called core-compressor in the sense that it forms part of the engine's core 24. The propulsive fan 12 can be considered to represent a low-pressure compressor but not a core-compressor because it does not form part of the core 24.

As is conventional, the core intermediate pressure compressor 13 comprises a plurality of aerofoil-shaped rotor blades 25 which are mounted to a compressor rotor 26 in discrete rows or stages. Between successive rows of the rotor blades 25, there are mounted respective rows of aerofoil-shaped stator vanes 27. Each row of stator vanes 27 is formed as an array of radially extending vanes 27 which are mounted to, and extend inwardly from, a casing 28 which surrounds the compressor's rotor 13.

In the particular engine configuration illustrated in Figure 2, the first two rows (relative to the right-to-left axial flow direction through the engine) of stator vanes 27 are provided in the form of so-called Variable Stator Vanes (VSVs), denoted 27a, of a type known *per se.* The individual vanes within each row of variable stator vanes 27a are arranged to be adjusted collectively and in synchronism about respective axes which extend radially relative to the engine's principal rotational axis X-X, via a mechanism 29 which may comprise, for example individual levers connected between a unison ring and respective vanes. As will be appreciated by those of skill in the art, the variable stator vanes 27a are adjusted during operation of the engine, between a closed position (during low power engine operation) in which they reduce the incidence of the core airflow A on the downstream rotor blades 25, and an open position (during high power engine operation) in which they permit a higher incidence of the core airflow A on the downstream rotor blades 25.

The particular engine configuration illustrated in Figure 2 also has a series of Variable Inlet Guide Vanes (VIGVs) 30, of a type known *per se.* The variable inlet guide vanes 30 are provided in an annular array across the gas-flow annulus through the compressor 13, at an upstream end of the compressor 13, and serve a similar function to the variable stator vanes 27a in adjusting the incidence of the core airflow A on the first row of rotor blades 25. The variable inlet guide vanes 30 are thus arranged to move about respective axes which are arranged radially relative to the engine's principal rotational axis X-X, via a similar mechanism 31, between open and closed positions.

As is conventional, the variable stator vanes 27a and the variable inlet guide vanes 30 may be controlled by the engine's electronic control system (not shown) during normal operation of the engine 10.

The engine 10 shown in Figures 1 and 2 also has a series of so-called engine section stator vanes (ESVs) 32, also of a type known *per se,* which are fixed and which extend radially across the gas flow annulus into the core compressor 13, axially upstream of the compressor 13. The engine sector stator vanes 32 serve to direct the core airflow A from the fan 12 into the compressor 13 in an appropriate manner.

The engine is provided with an integral anti-icing arrangement which is illustrated in Figure 2. The anti-icing arrangement includes a fluid delivery system 33, which comprises a number of main flow ducts 34 which are spaced circumferentially around the compressor 13 and which are arranged to deliver fluid from a first, relatively downstream, region 35 of the engine to a second, relatively upstream, region 36 of the engine. In particular, the main flow ducts 34 are each arranged to direct a flow of relatively hot (by virtue of being compressed) gas which is bled from the downstream region of the compressor 13 during operation of the engine, and to direct the hot gas forwardly towards the engine section stator vanes 32. At least some of the engine section stator vanes 32 include a series of internal flow channels 37 which are fluidly connected to the main flow ducts 34, and which have fluid outlets 38 which are directed generally rearwardly towards the variable inlet guide vanes 30 and other components of the compressor 13.

A fluid flow valve 39 is provided within the path of each of the main flow ducts 34, and each such valve is arranged for operation by the engine's electronic control system. Each flow valve 39 is configured to have discrete settings or positions, as will be described in more detail hereinafter. Each valve 39 is connected within a respective flow duct 34 via a first inlet 40, and a single outlet 41. As will thus be appreciated, the first inlet 40 is arranged to receive a flow of hot bleed gas drawn from the downstream region of the compressor 13, and the outlet 41 is arranged to provide a flow of fluid in a forwards direction from the valve towards the engine section stator vanes 32.

Additionally, at least some of the valves 39 are configured so as to have a second inlet 42. Each such valve 39 has its second inlet 42 fluidly connected to a secondary flow duct 43 which, as will become clear below, is arranged to pass a flow of liquid rather than gas. The secondary flow ducts 43 may all be connected to a liquid manifold (not shown) which, in turn, is fluidly connected to a liquid connection port 44, as illustrated schematically in Figure 1. The fluid connection port 44 may be provided at any suitable position around the engine's nacelle 21 for convenient access, and is configured for fluid connection to an external supply of cleaning liquid which may be provided in the form of water, or a solution of suitable cleaning chemicals. It is envisaged, for example, that the fluid connection port 44 may be provided in the region of the engine's fan cowl doors or thrust-reverser, where it will be conveniently located for access by workers servicing and/or washing the engine. In this regard, it is to be noted that the present invention may be configured for use with a cleaning fluid provided in the form of a liquid foam (i.e. a liquid in which are trapped bubbles of gas such as air), and so the term "liquid" as used herein should be interpreted as including such liquid foams as well as pure liquids.

The or each valve 39 which is connected to a secondary flow duct 43 as described above may be provided in the form of a three-position valve and is operable to switch between its three positions under the control of the engine's electronic control system. Each flow valve 39 thus has: i) a fully closed position in which it prevents the flow of hot gas from the downstream region 35 of the compressor 13 to the engine section stator vanes 32, and in which it prevents the flow of any liquid from the secondary flow ducts 43 to the engine section stator vanes 32; ii) an anti-icing position in which it is open to the flow of hot gas from the downstream region 35 of the compressor 13 and towards the engine section stator vanes 32, but in which it prevents the flow of any liquid from the secondary flow ducts 43; and iii) a washing position in which it is open to the flow of liquid from the secondary flow ducts 43 to the engine section stator vanes 32, but in which it prevents to flow of any hot gas from the downstream region 35 of the compressor 13.

During normal operation of the engine 10, the valves 39 may be switched, under the control of the engine's electronic control system, between their fully closed positions and their anti-icing positions depending on whether there is a risk of ice forming on the internal components (i.e. the rotor and stator blades) of the compressor 13. For example, during periods of engine operation in which there is no risk of such ice forming, the valves 39 will be set in their fully closed positions. During periods in which there is a risk of ice forming on the engine's internal components, the valves 39 will be switched to their anti-icing positions to thereby configure the fluid delivery system 33 in an anti-icing mode to permit the flow of hot bleed gas from the downstream region 35 of the compressor 13, through the main flow ducts 34, and to deliver the hot bleed gas to the forward region of the compressor 13 and direct it rearwardly through the compressor, from the fluid outlets 38 in the engine section stator vanes. The hot gas will thus be directed rearwardly through the compressor 13 and washed over the compressor's internal components to prevent the build-up of ice.

When it is deemed necessary or appropriate to wash the engine's internal components, for example during a scheduled service, the external fluid connection port 44 will be connected to an external supply of cleaning liquid of the type mentioned above. For example, the fluid connection port may be connected to a large hose running from a bowser or the like. The engine's electronic control system can then be used to switch the valves 39 to their washing positions and thereby configure the fluid delivery system 33 in a washing mode to permit the flow of cleaning liquid from the external supply, through the connection port 44 and its associated manifold, through the secondary flow ducts 43 and thence through the valves 39 and into the main flow ducts 34 via which the cleaning liquid will then be delivered to the flow channels 37 within the engine section stator vanes 32 to be sprayed into and through the compressor 13 via the outlet nozzles 38. The cleaning liquid will thus be directed towards the engine's internal components within the core 24, including the compressor rotor blades 25 and stator blades 27, 30, but also onwards through the high pressure compressor 14, the combustion equipment 15, and the turbines 16, 17, 18, and finally out through the exhaust nozzle 19.

As will thus be appreciated, by controlling the valves 39, the engine's electronic control system effectively controls the flow of cleaning liquid through the engine's core 24, using the engine's integrated fluid delivery system 33 which usually serves an anti-icing function during normal operation of the engine.

As will also be appreciated, in order to produce an appropriate flow of the cleaning liquid through the through the fluid delivery system 33 such that it is sprayed into and through the compressor 13 from the outlet nozzles 38, the external supply of cleaning liquid to which the system is connected must be pressurised. It is therefore proposed that the engine's electronic control system may be configured to detect the presence of sufficient liquid pressure at the manifold of the connection port 44, for example by the provision of a simple pressure sensor positioned in the manifold and operatively connected to the engine's electronic control system.

It is proposed that to increase the cleaning efficiency of the above-described system, the engine's variable stator vanes 27a and/or the variable inlet guide vanes 30 may be moved to their respective open positions during engine-washing to help maximise the volume of cleaning liquid which can be directed through the engine's core 24. It is therefore proposed to configure the engine's electronic control unit so that when it configures the fluid delivery system 33 in its washing mode, it also actuates the mechanisms 29, 31 to open the variable stator vanes 27a and the variable inlet guide vanes 30.

Additionally, it is proposed to rotate the compressor rotor 26, and also optionally the other downstream rotors comprising the high pressure compressor 14 and the turbines 16, 17, 18, during the direction of the cleaning liquid through the engine core 24. Such rotation of the rotors can also be controlled by the engine's electronic control system when operating in the washing mode.

It is also envisaged that the system could be operated in the above-described anti-icing mode immediately after the washing procedure has been completed, thereby directing a flow of hot gas through the fluid delivery system 33 from the downstream region 35 of the compressor 13 to purge any water remaining in the system, and within the engine's core 24, from the washing process. Operating the system in the anti-icing mode could also permit a washing procedure to be carried out at lower temperatures than the above-described prior art washing methods.

As will be appreciated, the above-described arrangement and method permits significantly easier washing of the engine 10, because it does not require cumbersome and specialist washing equipment to be affixed, and subsequently removed from the engine. Instead, the present invention uses the engine's fluid delivery system 33, which is normally used for anti-icing purposes during operation of the engine, to deliver a flow washing liquid through the core 24 without the need for any additional equipment apart from a suitable supply of washing liquid such as a bowser or the like. Additionally, it should be noted that because the present invention does not involve directing cleaning liquid through the forwardly-located fan 12 of the engine, all of the liquid used will be directed through the engine's core 24, with none being wasted by passing through the engine's bypass duct 22.

Whilst the invention has been described above with reference to specific embodiments, it is to be appreciated that various changes or modifications can be made without departing from the scope of the invention. For example, it is envisaged that in some embodiments the fluid delivery system 33 could be configured to draw water from a reservoir or tank carried by the aircraft and which is provided in fluid communication with the secondary flow ducts 43. The system could thus be operated in a mode similar to the above-described washing mode to inject water into the engine's core 24 during operation of the engine, under the control of the electronic control system, to provide a water injection effect and thereby boost engine performance for short periods such as, for example, during aircraft take-off.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A method of washing a gas turbine engine (10) of a type having an anti-icing arrangement comprising a fluid delivery system (33) configured to deliver a flow of hot gas to a region (36) of the engine during operation of the engine, the method comprising the steps of: connecting a supply of cleaning liquid to said fluid delivery system (33); creating a flow of said cleaning liquid through at least part of said fluid delivery system (33) for delivery to said region (36) of the engine; and directing said cleaning liquid towards internal components (25, 27, 30) of the engine.

2. A method according to claim 1, wherein said internal components include aerofoil blades (25) located within the core (24) of the engine, and said step of directing the cleaning liquid towards said internal components (25) involves spraying the cleaning liquid through at least part (13) of the engine's core (24), from said region (36) of the engine towards said aerofoil blades (25).

3. A method according to claim 2, wherein said aerofoil blades include rotor blades (25) provided around one or more rotors (26) within the core (24) of the engine, and the method further includes the step of rotating the or each said rotor (24) during said step of directing the cleaning liquid towards said internal components.

4. A method according to any preceding claim, wherein said region (36) of the engine to which said flow of cleaning fluid is delivered via the engine's fluid delivery system (33) is located at the upstream end of a core compressor (13) of the engine.

5. A method according to claim 4, wherein said core compressor (33) includes a plurality of variable stator vanes (27a) towards which said cleaning liquid is directed from said region (36) of the engine, the method further including the step of opening said variable stator vanes (27a).

6. A method according to claim 4 or claim 5, wherein said core compressor (13) includes a plurality of variable inlet guide vanes (30) towards which said cleaning liquid is directed from said region (36) of the engine, the method further including the step of opening said variable inlet guide vanes (30).

7. A method according to any one of claims 4 to 6, wherein the engine includes a plurality of engine section stator vanes (32) located at the upstream end of its core (24), at least some which include flow channels (37) and fluid outlets (38) forming part of said fluid delivery system (33), the method including the step of directing said cleaning liquid through said flow channels (32) and outlets (38).

8. A gas turbine engine (10), the engine having an anti-icing arrangement comprising a fluid delivery system (33) which is arranged to operate in i) an anti-icing mode in which it is configured to bleed a flow of hot gas from a first region (35) of the engine and deliver the flow of hot gas to a second region (36) of the engine during operation of the engine, and ii) a discrete washing mode in which it is: connectable to a flow of cleaning liquid; and configured to direct said cleaning liquid to said second region (36) of the engine and to direct said cleaning liquid towards internal components (25, 27, 30) of the engine.

9. A gas turbine engine according to claim 8, wherein said second region (36) of the engine to which said cleaning liquid is directed in said washing mode is located at the upstream end of a core compressor (13).

10. A gas turbine engine according to claim 8 or claim 9, the engine having a plurality of engine section stator vanes (32) located at the upstream end of its core (24), and wherein at least some of said engine section stator vanes (32) include flow channels (37) and fluid outlets (38) forming part of said fluid delivery system.

11. A gas turbine engine according to any one of claims 8 to 10, wherein said fluid delivery system includes a fluid flow valve (39), the valve (39) being operable to select between said anti-icing mode and said washing mode, and having a plurality of discrete configurations including at least a first configuration in which it permits the flow of said hot gas from said first region (35) of the engine to said second region (36) of the engine in said anti-icing mode, and a second configuration in which it permits the flow of said cleaning liquid to said second region (36) of the engine in said washing mode.

12. A gas turbine engine according to claim 11, wherein said valve (39) is configured to prevent the flow of said cleaning liquid when in said first configuration, and is configured to prevent the flow of said hot gas when in said second configuration.

13. A gas turbine engine according to claim 11 or claim 12, wherein said valve (39) has a third configuration in which it prohibits the flow of both said hot gas and said cleaning liquid to said second region (36) of the engine.

14. A gas turbine engine according to any one of claims 11 to 13, having a liquid connection port (44) provided in fluid communication with said fluid delivery system, the connection port (44) being configured for connection to an external supply of said cleaning liquid.

15. A gas turbine engine according to claim 14, wherein said liquid connection port (44) is fluidly connected (43) to said valve (39).
